# EUROPÄISCHE PATENTSCHRIFT

(11) **EP 0 405 260 B1**
(45) Veröffentlichungstag und Bekanntmachung des Hinweises auf die Patenterteilung: **09.11.1994**
(21) Anmeldenummer: 90111382.9
(22) Anmeldetag: 16.06.1990
(51) Int. Cl.: B65B 35/40, B65B 59/02, B65B 35/52, B65G 57/30

(54) **Verfahren zum Bilden von Gruppen aus (Weich-)Packungen und Vorrichtung hierfür**
Method and device for forming groups of packages
Procédé et dispositif pour la formation de groupes d'emballages

(30) Priorität: 24.06.1989 DE 3920711
(43) Veröffentlichungstag der Anmeldung: 02.01.1991
(73) Patentinhaber: Focke & Co. (GmbH & Co.), 27283 Verden (DE)
(72) Erfinder: Heinz, Focke, D-2810 Verden (DE); Dreyer, Uwe, D-5600 Wuppertal 23 (DE)
(74) Vertreter: Bolte, Erich, Dipl.-Ing.

(56) Entgegenhaltungen:
- DE-A- 1 586 258
- GB-A- 1 371 273
- GB-A- 2 017 053
- US-A- 3 013 369

## Beschreibung

Die Erfindung betrifft ein Verfahren zum Bilden von Gruppen aus (quaderförmigen) Packungen, insbesondere (Weich-)Packungen, durch Abschieben von einer Sammelebene bzw. von einem Stapel der durch einen Packungsheber übereinandergestapelten Packungen, wobei eine Anzahl von übereinander angeordneten Packungen durch einen taktweise betätigten Schieber in Querrichtung abgeschoben wird, vorzugsweise auf einen Abförderer, und wobei ein Antrieb für die hin- und hergehende Abschubbewegung des Schiebers mit einem Antrieb für den Packungsheber synchron läuft, insbesondere mit diesem verbunden ist. Weiterhin betrifft die Erfindung eine Vorrichtung zur Durchführung des Verfahrens.

In der Verpackungstechnik ist es vielfach erforderlich, Gebinde herzustellen, die aus mehreren mit einer Umhüllung versehenen, übereinanderliegenden Lagen kleinerer Packungen bestehen. Hierzu wird aus den Packungen mittels eines Packungshebers, wie er z.B. in der Patentanmeldung P 39 15 600.1 der Anmelderin beschrieben ist, zuerst ein Stapel gebildet, von dem dann die Packungen mittels eines am Stapel angeordneten Schiebers in Gruppen, bestehend aus mehreren übereinanderliegenden Lagen, abgeschoben werden. Die Packungsgruppen in der Größe der Gebinde werden dann in einer Verpackungsmaschine mit der Umhüllung versehen.

Sofern Gebinde unterschiedlicher Größe, bestehend aus einer unterschiedlichen Anzahl von übereinander angeordneten Lagen kleinerer Einzelpackungen, wie Papiertaschentuch-Packungen, hergestellt werden sollen, ist es jeweils erforderlich, den Antrieb des am Stapel des Packungshebers angeordneten Schiebers umzurüsten.

Eine Vorrichtung der eingangs genannten Art zeigt die DE-A-1 586 258. Ein Packungsheber und ein Schieber werden über eine Hauptwelle angetrieben und sind durch eine starre getriebliche Kopplung miteinander synchronisiert. Die Abschubbewegung ist sehr langsam. Eine Anpassung an unterschiedliche Stapelhöhen ist nur durch Austauschen von Getriebeorganen möglich.

Der Erfindung liegt die Aufgabe zugrunde, Maßnahmen vorzuschlagen, durch die auf einfache Weise Stapel unterschiedlicher Größe, also aus unterschiedlicher Anzahl von Gegenständen bzw. Packungen, gebildet werden können, und zwar ohne schwierige Umstellungsmontage.

Zur Lösung der Aufgabe wird erfindungsgemäß vorgeschlagen, daß der Schieber nach Maßgabe des gebildeten Stapels mit dem Antrieb zur Durchführung der Abschubbewegung gekoppelt und nach Durchführung der Abschubbewegung entkuppelt wird.

Die Packungen werden demnach fortlaufend bzw. taktweise durch einen Packungsheber von unten zugefördert, so daß ständig ein Stapel von mehreren übereinanderliegenden Packungen vorhanden ist, und zwar gegebenenfalls auch mit mehreren Packungen nebeneinander, die gleichzeitig lagenweise gehoben werden. Sobald eine vorgegebene bzw. gewünschte Anzahl von Packungen oberhalb einer Abschubebene liegt, wird der in horizontaler Ebene bewegbare Schieber betätigt und die Gruppe aus übereinanderliegenden Packungen (Stapel) in Horizontalrichtung abgeschoben auf einen Abförderer.

Die Höhe des abzuschiebenden Stapels, also die Anzahl der bei einem Abschubtakt übereinanderliegenden Packungen (z.B. eine, zwei oder drei Packungen) kann auf verschiedene Weise im Sinne der Erfindung festgestellt und zur Betätigung des Schiebers verwertet werden. Gemäß einer bevorzugten Ausführungsform wird die Anzahl der übereinanderliegenden Packungen des Stapels durch mechanische oder elektrische (elektronische) bzw. opto-elektronische Abtastorgane ermittelt und danach ein Steuersignal für den Schieber erzeugt. Es ist aber auch möglich, die Anzahl der Packungen durch ein einstellbares, mechanisches Steuerglied festzulegen und danach den Schieber zu betätigen.

Der Antrieb für den Schieber (Schieber-Antrieb) läuft synchron mit dem Antrieb für den Packungsheber. Die Abschubbewegung für eine Gruppe von Packungen ist demnach auf den Arbeitstakt der Zuführung von Packungen zum Stapel abgestimmt.

Besonders vorteilhaft ist ein synchron mit dem Packungsheber ständig umlaufender Schieber-Antrieb, insbesondere ein Kurbelantrieb, mit dem der Schieber zeitweilig zur Durchführung einer Abschubbewegung gekoppelt wird. Ein Kupplungsorgan ist nach einem weiteren Vorschlag der Erfindung fortwährend in Richtung auf die Herstellung der Verbindung zwischen Schieber-Antrieb und Schieber belastet (Zugfeder). Eine Sperre für das Kupplungsorgan wird nach Maßgabe der gebildeten Stapelhöhe gelöst, so daß das Kupplungsorgan die Verbindung mit dem Schieber-Antrieb herstellen kann.

Weitere Merkmale der Erfindung beziehen sich auf die Ausbildung von Schieber-Antrieb, Kupplungsorgan und Sperre sowie auf die Ausgestaltung eines mechanischen Steuerorgans für die Abschubbewegungen.

Ausführungsbeispiele der Erfindung werden nachfolgend anhand der Zeichnungen erläutert. Es zeigt:
- Fig. 1: eine Seitenansicht eines Packungshebers mit einem am Stapel angeordneten Schieber in schematischer Darstellung,
- Fig. 2: eine Seitenansicht des Antriebs eines Schiebers nach Fig. 1,
- Fig. 3: der Antrieb des Schiebers gemäß Fig. 2 im Querschnitt,
- Fig. 4: der Schieber gemäß der Fig. 1 in der Draufsicht von oben,
- Fig. 5: eine Darstellung entsprechend Fig. 2 eines anderen Ausführungsbeispiels der Erfindung,
- Fig. 6: das Getriebe gemäß Fig. 5 in einer veränderten Stellung von Getriebeorganen.

Die Erfindung bezieht sich darauf, mittels eines Schiebers 10 Packungen 11, insbesondere Papiertaschentuch-Packungen in Gruppen 12 von einem Stapel 13 eines Packungshebers 14 abzuschieben. Es werden bekanntlich von derartigen Pakkungen 11 Gebinde hergestellt, die aus zwei, drei oder vier Lagen von Einzelpackungen übereinander bestehen. Der vorliegende Antrieb ermöglicht es, in einfacher Weise, durch einfaches Umschalten eines Steuergliedes, die Anzahl der übereinanderliegenden Packungen 11 je Gruppe 12 zu bestimmen. Die Gruppenbildung erfolgt dann selbsttätig durch Abschieben einer Gruppe von zwei, drei oder vier übereinanderliegenden Packungen 11 durch den Schieber 10.

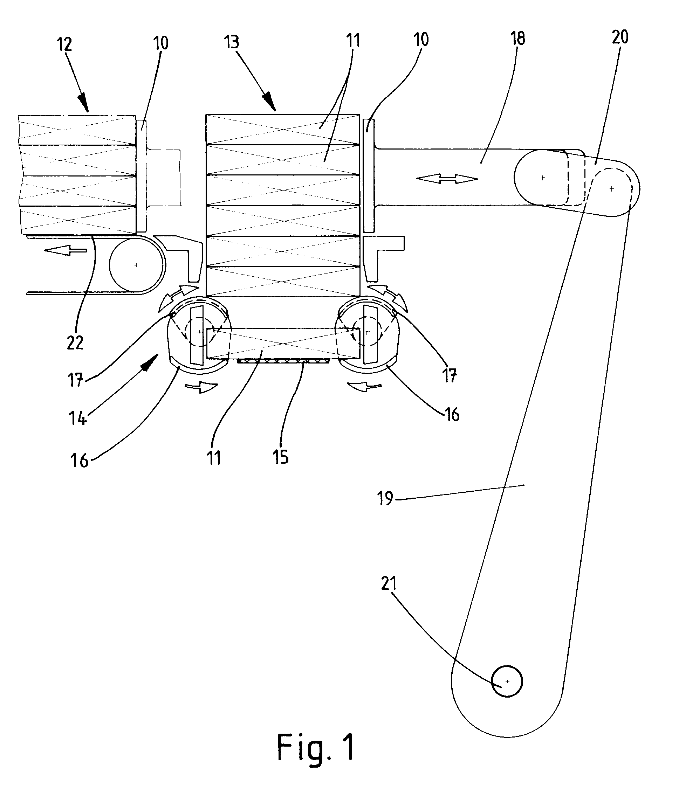

Wie aus der Fig. 1 ersichtlich ist, werden dem Packungsheber 14 Packungen 11 auf einem Förderer 15 zugeführt. Der Packungsheber 14 weist gegenläufig rotierende Fördersegmente 16 auf, die die Packungen 11 von unten erfassen und anheben. Oszillierende Haltesegmente 17 des Packungshebers 14 halten die angehobenen Packungen 11 während der rotierenden Bewegungen der Fördersegmente 16.

Oberhalb des Packungshebers 14 wird ein Stapel 13 von Packungen 11 gebildet. Die Packungen 11 können dabei sowohl einzeln als auch in Reihen hintereinanderliegend im Stapel 13 angeordnet sein.

Seitlich des Stapels 13 ist der Schieber 10 an einem Schlitten 18 quer zum Stapel 13 verschiebbar angeordnet. Am Schlitten 18 greift ein Schieberarm 19 über eine gelenkig angeordnete Koppel 20 an. Der Schieberarm 19 ist auf einer Hauptwelle 21 drehfest angeordnet. Über den Schieberarm 19 erfolgt der Antrieb des Schlittens 10.

Aus der Fig. 1 ist weiterhin ersichtlich, daß bei einer Bewegung des Schiebers 10 nach links eine Gruppe 12 von Packungen 11 auf einen Abförderer 22 geschoben wird. Der Abförderer 22 führt die Gruppe 12 von Packungen 11 einer in der Zeichnung nicht dargestellten Verpackungsmaschine zu, in der durch Anbringen einer Umhüllung Verpackungsgebinde fertiggestellt werden.

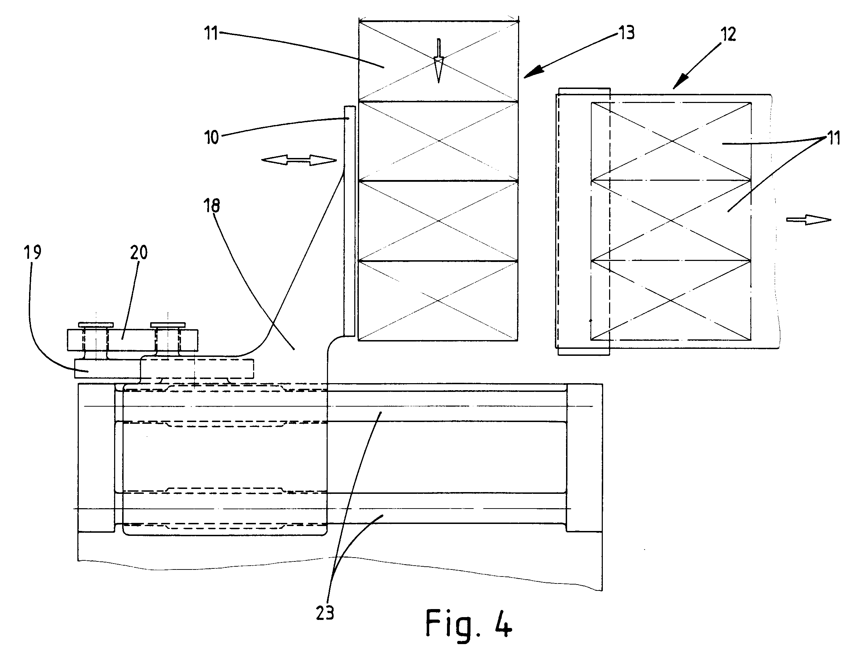

Wie aus der Fig. 4 ersichtlich, ist der Schlitten 18 des Schiebers 10 auf zwei Gleitstangen 23 verfahrbar. Es ist somit sichergestellt, daß der Schlitten 18, an dem Schieber 10 seitlich angeordnet ist, ohne zu verkanten leicht bewegt werden kann.

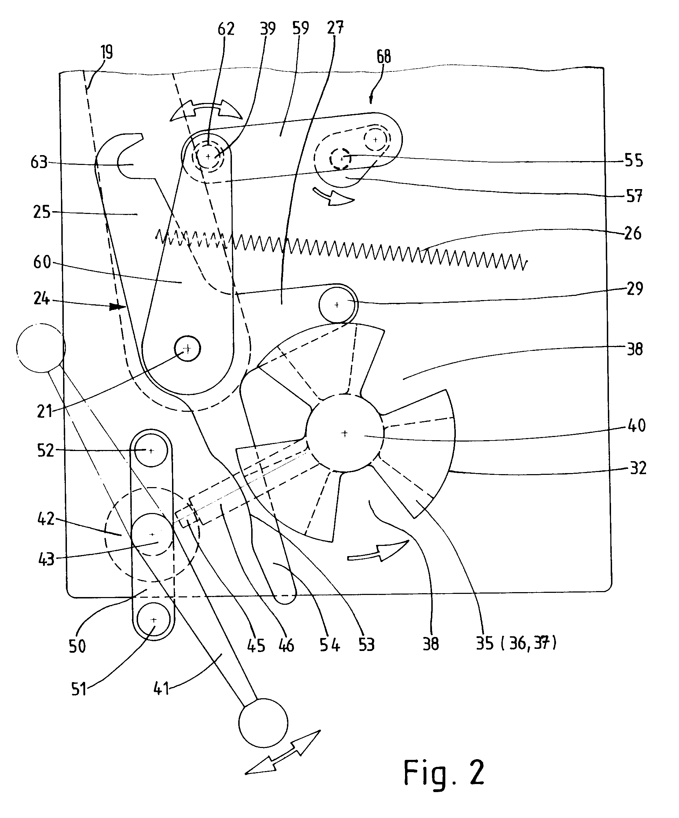

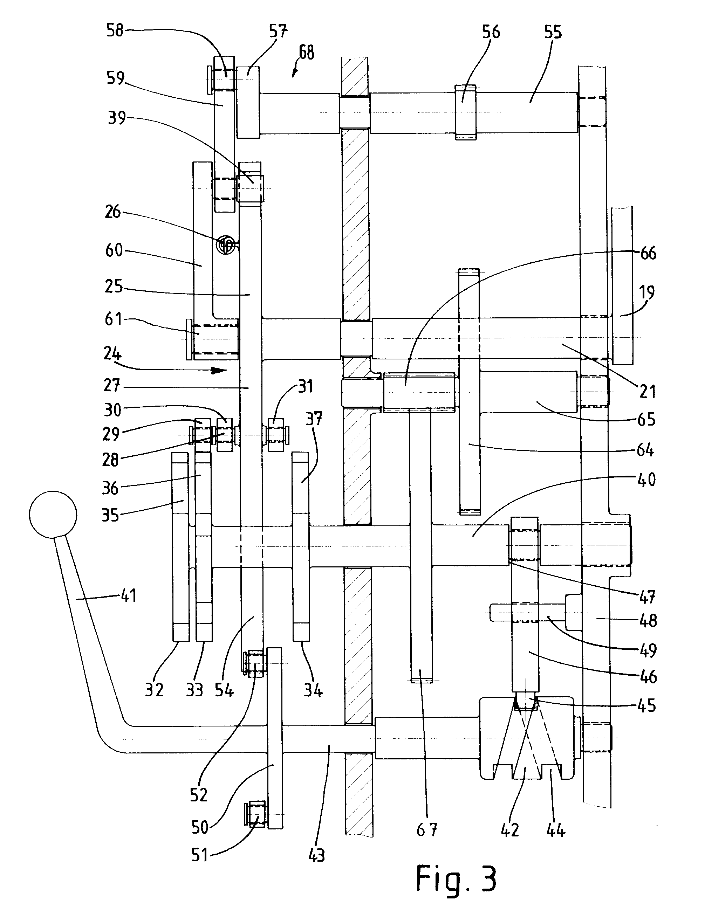

Wie aus Fig. 3 der Zeichnungen ersichtlich ist, ist auf der Hauptwelle 21 des Schieberarms 19 auch ein Betätigungshebel 24 drehfest angeordnet. An einem Betätigungsarm 25 des Betätigungshebels 24 greift, wie insbesondere auch aus Fig. 2 ersichtlich, eine als Zugfeder ausgebildete Feder 26 an, die den Betätigungshebel 24 und den mit diesem über die Hauptwelle 21 verbundenen Schieberarm 19 nach rechts bewegt. An einem Abtastarm 27 des Betätigungshebels 24 auf einer gemeinsamen Achse 28 angeordnete Tastrollen 29, 30 und 31 legen sich unter dem Einfluß der Kraft der Feder 26 auf Steuerkurven 32, 33 und 34 am Umfang von Steuerscheiben 35, 36 und 37. Die Tastrollen 29, 30 bzw. 31 halten dann den Betätigungshebel 24 in der in Fig. 2 der Zeichnung dargestellten Position.

Der Betätigungshebel 24 wird so lange in seiner Ausgangsstellung gehalten, bis im Stapel 13 die eingestellte Anzahl von übereinander angeordneten Packungen 11 erreicht ist. Dann fällt die jeweils an der Steuerkurve 32, 33 oder 34 anliegende Tastrolle 29, 30 oder 31 in eine Ausnehmung 38 der Steuerscheiben 35, 36 oder 37. Nunmehr kann der Betätigungshebel 24 aus der in Fig. 2 gezeigten Ausgangsstellung nach rechts verschwenkt werden bis zur Anlage an einem Zapfen 39. Diese Schwenkbewegung des Betätigungshebels 24 bewirkt zugleich über die Verbindung desselben mit dem Schieberarm 19 eine Betätigung des Schiebers 10.

Für die drei unterschiedlich großen anzufördernden Gruppen 12 sind auf den drei Steuerscheiben 35, 36, 37 eine unterschiedliche Anzahl von Ausnehmungen 38 angeordnet. So hat die Steuerscheibe 35 drei Ausnehmungen 38 und ist für die Herstellung von Gruppen 12, bestehend aus vier übereinander angeordneten Packungen 11, bestimmt. Die Steuerscheibe 33 hat sechs Ausnehmungen und dient der Erzeugung von Gruppen 12, bestehend aus zwei Packungen. Die Steuerscheibe 37 weist vier Ausnehmungen 16 auf, so daß Gruppen 12, bestehend aus drei übereinander angeordneten Packungen 11, gebildet werden.

Die Steuerkurven 32 und 33 der Steuerscheiben 35 und 36 sind so zueinander angeordnet, daß die Ausnehmungen 38 miteinander fluchten. Dadurch ist es möglich, bei der wirksamen Stellung für eine Gruppe von vier übereinander angeordneten Packungen 11 (wirksame Steuerkurve 32) zugleich auch die Tastrolle 30 an der Steuerkurve 33 der Steuerscheibe 36 anliegen zu lassen. Die Tastrolle 30 kann aber nur in drei der sechs Ausnehmungen 38 dieser Steuerkurve 33 eintreten, weil bei den übrigen Ausnehmungen 38, die nur mit drei Ausnehmungen 38 ausgebildete Steuerkurve 32 dies verhindert. Aufgrund dieser Gestaltung der Steuerscheiben 35 und 36 werden kurze Stellbewegungen der die Steuerscheiben 35, 36, 37 tragenden Steuerwelle 40 möglich.

Die Steuerscheiben 35, 36, 37 werden durch eine axiale Verstellung der Steuerwelle 40 mit den Tastrollen 29, 30, 31 in Eingriff gebracht. Die Verstellung erfolgt durch einen Handhebel 41, der drehend in der einen oder anderen Richtung betätigt wird. Der Handhebel 41 ist auf einer an einen Schneckenkörper 42 geführten Welle 43 angeordnet.

Beim Verschwenken des Handhebels 41 wird der Schneckenkörper 42 verdreht und ein in eine Nut 44 eintretender Taststift 45 eines Schiebearms 46 wird in der ,einen oder anderen Richtung bewegt. Der Schiebearm 46 ist auf der Steuerwelle 40 in einer Nut 47 in axialer Richtung arretiert, so daß die Steuerwelle 40 in der einen oder anderen Richtung axial verschoben wird. Ein am Gehäuse 48 des Antriebs befestigter Haltestift 49 verhindert Drehbewegungen des Schiebearms 46.

Um zu verhindern, daß während der Stellbewegungen der Steuerwelle 40 eine Tastrolle 29, 30, 31 in eine Ausnehmung 38 einer Steuerscheibe 35, 36, 37 eintritt, ist am Handhebel 41 eine Sperre in Form eines drehbaren Doppelhebels 50 angeordnet. Dieser tritt zeitweilig mit einer Stützrolle 51, 52 in eine Vertiefung 53 eines Stützarms 54 des Betätigungshebels 24 ein und verhindert während der entscheidenden Phase der Stellbewegung der Steuerwelle 40 ein Verschwenken des Betätigungshebels 24.

Der Antrieb des Schiebers 10, nämlich ein Schieber-Antrieb 68, ist mit dem Antrieb der in der Fig. 1 dargestellten Fördersegmente 16 bzw. Haltesegmente 17 des Packungshebers 14 gekoppelt. Der Antrieb erfolgt über eine gemeinsame Kurbelwelle 55. Über ein auf der Kurbelwelle 55 angeordnetes Ritzel 56 wird die Steuerwelle 40 angetrieben. Eine Kurbel 57 der Kurbelwelle 55 betätigt über einen Zapfen 58 eine Koppel 59, die wiederum einen Schwenkhebel 60 betätigt. Der Schwenkhebel 60 ist gleichachsig mit dem Schieberarm 19 und dem Betätigungshebel 24 auf der Hauptwelle 21 angeordnet. Der Schwenkhebel 60 ist jedoch auf der Hauptwelle 21 im Bereich eines Wellenendes 61 drehbar gelagert.

Am freien Ende des Schwenkhebels 60 ist der Zapfen 39 mit einer Rolle 62 angeordnet. An diese legt sich der Betätigungsarm 25 des Betätigungshebels 24 mit einem freien, eine Ausnehmung 63 aufweisenden Ende an, wenn der Schieberarm 19 betätigt wird. Der Betätigungsarm 25 des Betätigungshebels 24 wird von der Feder 26 gegen den Zapfen 39 mit der Rolle 62 gezogen. Der Zapfen 39 des Schwenkhebels 60 fängt die Bewegung des Betätigungshebels 24 auf und verhindert, daß die Tastrollen 29, 30, 31 mit den Wandungen der Ausnehmungen 38 der Steuerscheiben 35, 36, 37 in Berührung kommen. Außerdem gibt der von der Kurbelwelle 55 angetriebene Schwenkhebel 60 mit seinem Zapfen 39 die Bewegungen des den Schieber 10 betätigenden Schieberarms 19 exakt vor, so daß die Bewegung des Schiebers 10 stets zum richtigen Zeitpunkt, in dem die Gruppe 12 des Stapels 13 zur Abförderung bereit liegt, erfolgt.

Das Ritzel 56 der Kurbelwelle 55 steht mit einem Zahnrad 64 einer Zwischenwelle 65 in Eingriff, was in der Fig. 3 der Zeichnung aus Gründen der Darstellungserfordernisse nicht gezeigt werden konnte. Auf der Zwischenwelle 65 ist ein walzenförmiges Ritzel 66 angeordnet, das in ein Zahnrad 67 der Steuerwelle 40 eingreift. Bei den axialen Schaltbewegungen der Steuerwelle 40 ist das Zahnrad 67 im walzenförmigen Ritzel 66 verschiebbar.

Ausgehend von der Kurbelwelle 55 bzw. dem Ritzel 56 wird bis zur Steuerwelle 40 bzw. bis zu den Steuerscheiben 35, 36, 37 eine Untersetzung bewirkt, und zwar im vorliegenden Ausführungsbeispiel im Verhältnis 12:1. Dies bedeutet, daß bei zwölf Umdrehungen der Kurbel 57 die Steuerscheiben 35, 36, 37 nur eine Umdrehung vollziehen. Das Verhältnis zu 12 ist das kleinste, gemeinsame Vielfache der auftretenden Stapelgrößen 2, 3, 4 Packungen übereinander. Dies bedeutet, daß je Umdrehung einer Steuerscheibe 35, 36, 37 mehrmals ein Stapel 13 erzeugt und vom Schieber 10 abgeschoben wird.

Bei der Herstellung von Gruppen 12, bestehend aus vier übereinanderliegenden Packungen 11 bedeutet das beispielsweise, daß im Bereich zwischen zwei benachbarten Ausnehmungen 38 in der Steuerkurve 32 vier Hubtakte des Packungshebers 14 stattfinden und dadurch vier Packungen 11 übereinander gestapelt sind, bevor die Tastrolle 29 in die (nächste) Ausnehmung 38 eintritt. Bei den anderen Steuerscheiben wird analog immer nach Zwölfteltakten vorgegangen.

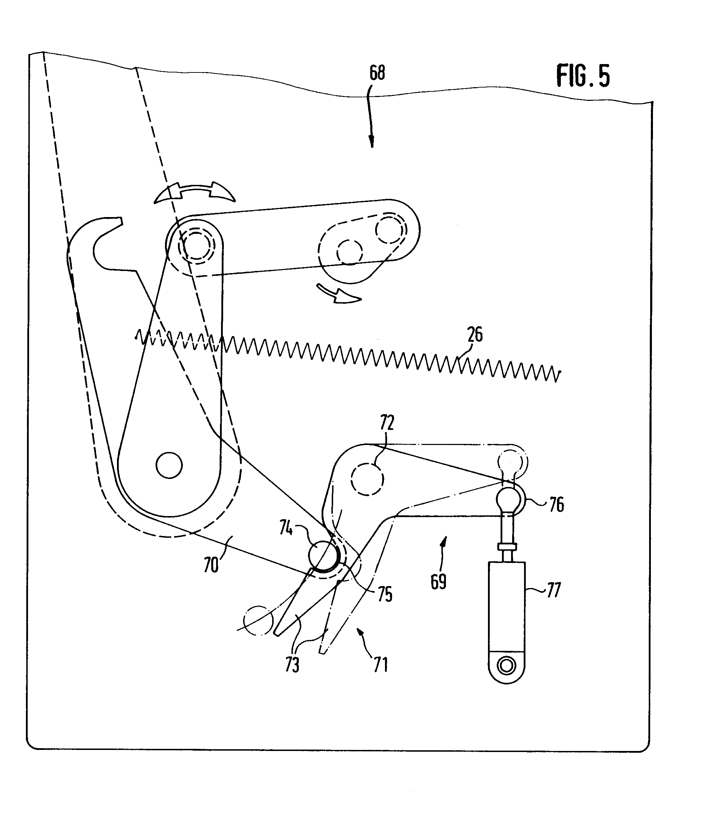

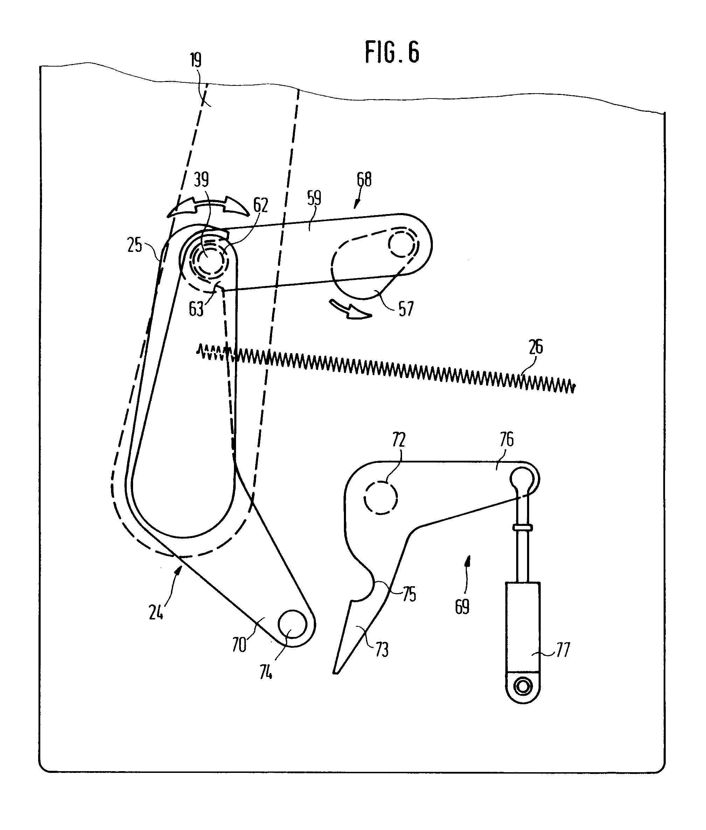

Das in Fig. 5 und 6 gezeigte bevorzugte Ausführungsbeispiel enthält hinsichtlich der Betätigung des Kupplungsorgans, nämlich des Betätigungshebels 24, eine Vereinfachung. Die mechanische Steuerung des Kupplungsorgans (Betätigungshebel 24) mittels Steuerkurven 32, 33 und 34 entfällt hier ersatzlos. Statt dessen wird der zweiarmige Betätigungshebel 24 im Bereich eines Stützarms 70 desselben durch eine Sperre 71 in der entkuppelten Ausgangsstellung gehalten. Die Sperre 71 besteht aus einem (zweiarmigen) Sperrhebel 69, der um ein Hebellager 72 schwenkbar ist. Ein freier Sperrarm 73 hält den Stützarm 70 und damit den Betätigungshebel 24 durch Aufnahme eines Sperrzapfens 74 in einer Vertiefung 75 des Sperrhebels 69. Der andere, freie Schwenkarm 76 des Sperrhebels 69 ist mit einem Betätigungsorgan verbunden, hier mit einem Druckmittelzylinder 77. Durch Ausfahren der Kolbenstange des Druckmittelzylinders 77 wird der Sperrhebel 69 gegen den Uhrzeigersinn verschwenkt, wodurch der Betätigungshebel 24 aus der Sperrstellung freikommt. Durch die Wirkung der Feder 26 kann nunmehr die Verbindung zwischen dem Schieberarm 19 und dem Schieber-Antrieb 68 in der beschriebenen Weise hergestellt werden.

Nach Durchführung eines Abschubtaktes wird das Kupplungsorgan, nämlich der Betätigungshebel 24 durch den Schieber-Antrieb 68 in die Ausgangsstellung (Fig. 2 bzw. Fig. 5) zurückbewegt. Die Sperre, nämlich der Sperrhebel 69, kann nun durch entsprechende Schwenkbewegung wieder einrasten und den Betätigungshebel 24 in der entkuppelten Stellung gemäß Fig. 5 halten.

Wie insbesondere aus Fig. 6 ersichtlich, sind die Bewegungen so aufeinander abgestimmt, daß das Kupplungsorgan, nämlich der Betätigungshebel 24 während der Endstellung des Schieberantriebs 68, nämlich der Koppel 59, ausgelöst wird. Über eine sehr kurze Schwenkbewegung kommt der Betätigungshebel 24 in Eingriff mit dem Schieber-Antrieb 68, nämlich dem Zapfen 39.

Grundsätzlich ist es besonders bei einer Lösung mit einer elektrischen oder elektronischen Abtastung einer bzw. mehreren Steuerscheiben auch möglich, den Schieber 10 anstelle mit der Feder 26 beispielsweise pneumatisch über einen Druckluftzylinder zu betätigen.

## Patentansprüche

1. Verfahren zum Bilden von Gruppen aus quaderförmigen Packungen (11), insbesondere Weich-Packungen, durch Abschieben von einer Sammelebene bzw. von einem Stapel (13) der durch einen Packungsheber (14) übereinandergestapelten Packungen (11), wobei eine Anzahl von übereinander angeordneten Packungen durch einen taktweise betätigten Schieber (10) in Querrichtung abgeschoben wird, vorzugsweise auf einen Abförderer (22), und wobei ein Antrieb (55 bis 60) für die hin- und hergehende Abschubbewegung des Schiebers (10) mit einem Antrieb für den Packungsheber (14) synchron läuft, insbesondere mit diesem verbunden ist, **dadurch gekennzeichnet,** daß der Schieber (10) nach Maßgabe des gebildeten Stapels (13) mit dem Antrieb zur Durchführung der Abschubbewegung gekoppelt und nach Durchführung der Abschubbewegung entkuppelt wird.

2. Verfahren nach Anspruch 1, dadurch gekennzeichnet, daß der Schieber (10) in Abhängigkeit von der Taktzahl des Packungshebers (14), durch den die Packungen (11) gestapelt werden, betätigt wird.

3. Verfahren nach Anspruch 1 oder 2, dadurch gekennzeichnet, daß die Höhe eines aus übereinander angeordneten Packungen (11) gebildeten Stapels (13) abgetastet und danach ein Steuersignal für die Betätigung des Schiebers (10) bzw. die Kopplung desselben mit dem Antrieb erzeugt wird.

4. Vorrichtung zum Bilden von Gruppen aus quaderförmigen Packungen (11), insbesondere Weich-Packungen, durch Abschieben von einer Sammelebene bzw. von einem Stapel (13) der durch einen Packungsheber (14) übereinandergestapelten Packungen (11), wobei eine Anzahl von übereinander angeordneten Packungen (11) durch einen taktweise betätigten Schieber (10) in Querrichtung abschiebbar ist, vorzugsweise auf einen Abförderer (22), und wobei ein Antrieb (55 bis 60) für die hin- und hergehende Abschubbewegung des Schiebers (10) mit einem Antrieb für den Packungsheber (14) synchron läuft, insbesondere mit diesem verbunden ist, dadurch gekennzeichnet, daß der Schieber (10) durch eine nach Maßgabe des gebildeten Stapels (13) steuerbare Kupplung mit dem Antrieb zur Durchführung der Abschubbewegung verbindbar und nach Durchführung der Abschubbewegung vom Antrieb abkuppelbar ist.

5. Vorrichtung nach Anspruch 4, dadurch gekennzeichnet, daß mechanische, elektrische, elektronische oder opto-elektronische Abtastorgane zur Ermittlung der Anzahl der übereinanderliegenden Packungen (11) des Stapels (13) vorgesehen sind.

6. Vorrichtung nach Anspruch 4 oder 5, dadurch gekennzeichnet, daß der Schieber (10) bzw. ein Schieberarm (19) desselben durch ein bewegbares Kupplungsorgan (Betätigungshebel 24) zur Durchführung einer Abschubbewegung des Schiebers (10) mit dem ständig umlaufenden Schieber-Antrieb (68) verbindbar ist.

7. Vorrichtung nach Anspruch 5 oder 6, dadurch gekennzeichnet, daß das Kupplungsorgan (Betätigungshebel 24) in Richtung auf die Kupplungsstellung insbesondere durch eine Zugfeder (26) belastet und durch eine lösbare Sperre in einer entkuppelten Ausgangsstellung fixiert ist, wobei durch Lösen der Sperre nach Maßgabe des gebildeten Stapels das Kupplungsorgan (Betätigungshebel 24) durch die Belastung (Zugfeder 26) in die Kupplungsstellung bewegbar ist.

8. Vorrichtung nach Anspruch 5, dadurch gekennzeichnet, daß das Kupplungsorgan (Betätigungshebel 24) durch den Schieber-Antrieb (68) während eines Bewegungszyklus in die (entkuppelte) Ausgangsstellung zurückbewegbar und in dieser verriegelbar ist.

9. Vorrichtung nach Anspruch 8, dadurch gekennzeichnet, daß der Betätigungshebel (24) mit dem Schieber (10) bzw. einem Schieberarm (19) verbunden, insbesondere mit dem Schieberarm (19) auf einer gemeinsamen Hauptwelle (21) gelagert ist, wobei nach Lösen der Sperre für den Betätigungshebel (24) dieser mit dem Schieber-Antrieb (68) unter Mitnahme des Schieberarms (19) bewegbar ist.

10. Vorrichtung nach Anspruch 4 sowie einem oder mehreren der weiteren Ansprüche, dadurch gekennzeichnet, daß der Schieber-Antrieb (68) als ständig umlaufender Kurbelantrieb ausgebildet ist, wobei das Kupplungsorgan (Betätigungshebel 24) zur Verbindung des Schieber-Antriebs (68) mit dem Schieber zur Anlage an einem mitumlaufenden Anschlag (Zapfen 39) des Schieber-Antriebs (68) bringbar ist.

11. Vorrichtung nach Anspruch 10, dadurch gekennzeichnet, daß der Schieber-Antrieb (68) mit einem Schwenkhebel (60) freidrehbar auf der Hauptwelle (21) abgestützt ist.

12. Vorrichtung nach Anspruch 7 sowie einem oder mehreren der weiteren Ansprüche, dadurch gekennzeichnet, daß die Sperre zum Fixieren des Kupplungsorgans (Betätigungshebel 24) aus einem bewegbaren, insbesondere schwenkbaren Anschlag (Sperrhebel 69) besteht, der in Sperrstellung am Betätigungshebel (24) abstützend anliegt.

13. Vorrichtung nach Anspruch 4 sowie einem oder mehreren der weiteren Ansprüche, dadurch gekennzeichnet, daß der Betätigungshebel (24) als zweiarmiger Hebel ausgebildet ist und daß die Sperre zur Fixierung des Betätigungshebels (24) in der entkuppelten Ausgangsposition an einem freien, vom Kupplungsende abliegenden Schenkel (Abtastarm 27) bzw. Stützarm (70) angreift.

14. Vorrichtung nach Anspruch 12, dadurch gekennzeichnet, daß der Sperrhebel (69) als zweiarmiger Hebel ausgebildet und durch einen Druckmittelzylinder betätigbar, nämlich verschwenkbar ist.

15. Vorrichtung nach Anspruch 4, dadurch gekennzeichnet, daß der Schieber-Antrieb ein mittels einer Handhabe (Handhebel 41) einstellbares Steuerglied (Steuerwelle 40) aufweist, das in Abhängigkeit von den Förderbewegungen des Packungshebers (14) angetrieben ist und die Vorschubbewegung des Schiebers (10) vorgibt, derart, daß entsprechend der Einstellung des Steuergliedes die Packungen (11) in Gruppen, bestehend aus einer vorgewählten Anzahl von übereinanderliegenden Lagen, vom Stapel (13) abgeschoben werden.

16. Vorrichtung nach Anspruch 15, dadurch gekennzeichnet, daß das Steuerglied aus mehreren, auf einer gemeinsamen Steuerwelle (40) angeordneten Steuerscheiben (35, 36, 37) besteht, an denen die Vorschubbewegungen des Schiebers (10) steuernde Abtastmittel (Tastrollen 29, 30, 31) anliegen, die mittels der Handhabe (Handhebel 41) wahlweise aktivierbar sind.

17. Vorrichtung nach Anspruch 16, dadurch gekennzeichnet, daß die Steuerscheiben (35, 36, 37) eine unterschiedliche Anzahl von Ausnehmungen (38) für die Abtastmittel (Tastrollen 29, 30, 31) aufweisen.

18. Vorrichtung nach Anspruch 10, dadurch gekennzeichnet, daß das Kupplungsorgan (Betätigungshebel 24) zur Betätigung des Schiebers (10) in einer dem Kupplungsorgan zugekehrten, unmittelbar benachbarten Stellung des umlaufenden Schieber-Antriebs (68) mit diesem in Verbindung bringbar ist.

## Claims

1. Process for forming groups of cuboidal packs (11), especially soft packs, by pushing off a collecting plane or a stack (13) the packs (11) stacked on top of one another by a pack lifter (14), in which a number of packs arranged on top of one another can be pushed off in the transverse direction by a pusher (10) actuated at fixed cycles, preferably onto a discharge conveyor (22), a drive (55 to 60) for the reciprocating pushing-off movement of the pusher (10) running in synchronization, in particular being linked, with a drive for the pack lifter (14), characterized in that the pusher (10) is coupled to the drive for performing the pushing-off movement in accordance with the stack (13) which has formed, and is decoupled after the pushing-off movement has been performed.

2. Process according to Claim 1, characterized in that the pusher (10) is actuated in accordance with the cycle frequency of the pack lifter (14), by means of which the packs (11) are stacked.

3. Process according to Claim 1 or 2, characterized in that the height of a stack (13) formed by packs (11) arranged on top of one another is scanned and a control signal for actuating the pusher (10) or the coupling of the latter to the drive is generated accordingly.

4. Apparatus for forming groups of cuboidal packs (11), especially soft packs, by pushing off a collecting plane or a stack (13) the packs (11) stacked on top of one another by a pack lifter (14), in which a number of paces (11) arranged on top of one another can be pushed off in the transverse direction by a pusher (10) actuated at fixed cycles, preferably onto a discharge conveyor (22), a drive (55 to 60) for the reciprocating pushing-off movement of the pusher (10) running in synchronization, in particular being linked, with a drive for the pack lifter (14), characterized in that the pusher (10) is linkable to the drive for performing the pushing-off movement via a coupling being controllable in accordance with the stack (13) which has formed, and can be uncoupled from the drive after the pushing-off movement has been performed.

5. Apparatus according to Claim 4, characterized in that mechanical, electric, electronic or opto-electronic scanning means are provided to determine the number of superposed packs (11) in the stack (13).

6. Apparatus according to Claim 4 or 5, characterized in that the pusher (10) or a pusher arm (19) thereof is linkable to the continuously rotating pusher drive (68) by a movable coupling means (actuating lever 24) for performing a pushing-off movement of the pusher (10).

7. Apparatus according to Claim 5 or 6, characterized in that the coupling means (actuating lever 24) is loaded in the direction towards the coupling position especially by a tension spring (26) and is fixed by a releasable lock in a decoupled starting position, the coupling means (actuating lever 24) being movable into the coupling position by the load (tension spring 26) by means of releasing the lock in accordance with the stack which has formed.

8. Apparatus according to Claim 5, characterized in that the coupling means (actuating lever 24) is movable back into the (decoupled) starting position by the pusher drive (68) during a movement cycle and is lockable in this starting position.

9. Apparatus according to Claim 8, characterized in that the actuating lever (24) is linked to the pusher (10) or a pusher arm (19), especially to the pusher arm (19) mounted on a common main shaft (21), the actuating lever (24), after its lock has been released, being movable by the pusher drive (68), taking along the pusher arm (19).

10. Apparatus according to Claim 4 and one or more of the further claims, characterized in that the pusher drive (68) is designed as a continuously rotating crank drive, the coupling means (actuating lever 24) being movable to contact a co-rotating stop (journal 39) of the pusher drive (68) for linking the pusher drive (68) with the pusher.

11. Apparatus according to Claim 10, characterized in that the pusher drive (68) is supported in a freely rotatable state by a pivoted lever (60) on the main shaft (21).

12. Apparatus according to Claim 7 and one or more of the further claims, characterized in that the lock for fixing the coupling means (actuating lever 24) consists of a movable, especially a pivotable, stop (locking lever 69) which contacts and supports the actuating lever (24) in locking position.

13. Apparatus according to Claim 4 and one or more of the further claims, characterized in that the actuating lever (24) is designed as a two-armed lever and in that the lock for fixing the actuating lever (24) engages a free leg (feeler arm 27) or supporting arm (70) extending from the end of the coupling, in the decoupled starting position.

14. Apparatus according to Claim 12, characterized in that the locking lever (69) is designed as a two-armed lever and is workable, namely pivotable, via a pressure medium cylinder.

15. Apparatus according to Claim 4, characterized in that the pusher drive has a control member (cam shaft 40) which is settable by a handle (hand lever 41), the control member being driven in accordance with the conveying movements of the pack lifter (14) and controlling the pushing-forward movement of the pusher (10), such that in accordance with the setting of the control member, the packs (11) are pushed off the stack (13) in groups consisting of a pre-chosen number of superposed layers.

16. Apparatus according to Claim 15, characterized in that the control member consists of several cam discs (35, 36, 37) arranged on a common cam shaft (40), with feeler means (feeler rolls 29, 30, 31) controlling the pushing-forward movements of the pusher (10) resting on said cam discs (35, 36, 37), the feeler means being selectively activatable by means of the handle (hand lever 41).

17. Apparatus according to Claim 16, characterized in that the cam discs (35, 36, 37) have a different number of recesses (38) for the feeler means (feeler rolls 29, 30, 31).

18. Apparatus according to Claim 10, characterized in that the coupling means (actuating lever 24) for actuating the pusher (10) is linkable to the rotating pusher drive (68) with the pusher drive being in a position directly adjacent to and facing towards the coupling means.

## Revendications

1. Procédé pour constituer des groupes d'emballages (11) parallélépipédiques, en particulier des emballages souples, par déplacement, depuis un plan de collecte, ou depuis une pile (13), des emballages (11) empilés les uns au-dessus des autres au moyen d'un élévateur d'emballages (14), une pluralité d'emballages disposés les uns au-dessus des autres étant poussée en direction transversale, au moyen d'un poussoir (10) à actionnement cadencé, de préférence sur un transporteur d'évacuation (22), et un entraînement (55 à 60) destiné au mouvement de poussée en va-et-vient du poussoir (10), effectuant un mouvement synchrone à celui de l'entraînement destiné à l'élévateur d'emballages (14), en particulier en étant relié à celui-ci, caractérisé en ce que le poussoir (10) est couplé à l'entraînement, d'après les indications qu'une pile (13) a été formée, pour effectuer un mouvement de poussée et est découplé après achèvement de ce mouvement de poussée.

2. Procédé selon la revendication 1, caractérisé en ce que le poussoir (10) est actionné en fonction du nombre de cycles de l'élévateur d'emballages (14), par lesquels les emballages (11) ont été empilés.

3. Procédé selon la revendication 1 ou 2, caractérisé en ce que la hauteur d'une pile (13) constituée d'emballages (11), disposés les uns au-dessus des autres, est appréhendée, un signal de commande destiné à l'actionnement du poussoir (10) ou du couplage de celui-ci à l'entraînement étant ensuite produit.

4. Dispositif pour constituer des groupes d'emballages (11) parallélépipédiques, en particulier d'emballages souples, par poussée, à partir d'un plan de collecte, respectivement depuis une pile (13) des emballages (11) empilés les uns au-dessus des autres au moyen d'un élévateur d'emballages (14), une pluralité d'emballages (11) disposés les uns au-dessus des autres pouvant être poussée en direction transversale au moyen d'un poussoir (10) à actionnement cadencé, de préférence sur un transporteur d'évacuation (22) et un entraînement (55 à 60) destiné au mouvement de poussée en va-et-vient du poussoir (10), ayant un mouvement synchrone par rapport à l'entraînement destiné à l'élévateur d'emballages (14), en particulier en étant relié à celui-ci, caractérisé en ce que le poussoir (10) peut être relié à l'entraînement, destiné à effectuer le mouvement de poussée, au moyen d'un couplage pouvant être commandé d'après indication qu'une pile (13) a été constituée, puis découplé de l'entraînement une fois que le mouvement de poussée a été effectué.

5. Dispositif selon la revendication 4, caractérisé en ce que des organes d'exploration mécanique, électrique, électronique ou opto-électronique sont prévus pour la détermination du nombre des emballages (10) supersposés de la pile (13).

6. Dispositif selon la revendication 4 ou 5, caractérisé en ce que le poussoir (10), ou un bras de poussoir (19) de celui-ci, peut être relié par un organe de couplage (levier d'actionnement 24) déplaçable, à l'entraînement de poussoir (68) en mouvement permanent, pour effectuer un mouvement de poussée du poussoir (10).

7. Dispositif selon la revendication 5 ou 6, caractérisé en ce que l'organe de couplage (levier d'actionnement 24) est sollicité dans la direction de la position de couplage, en particulier par un ressort de traction (26), et est fixé au moyen d'un verrou désolidarisable dans une position initiale découplée, l'organe de couplage (levier d'actionnement 24) étant déplaçable au moyen de la sollicitation (ressort de traction 26) pour passer dans la position de couplage, après désolidarisation du verrou, d'après indication qu'une pile a été constituée.

8. Dispositif selon la revendication 5, caractérisé en ce que l'organe de couplage (levier d'actionnement 24) est rappelable dans la position initiale (découplée) et verrouillable dans celle-ci au moyen de l'entraînement de poussoir (68) pendant un cycle cinématique.

9. Dispositif selon la revendication 8, caractérisé en ce que le levier d'actionnement (24) est relié au poussoir (10), ou à un bras de poussoir (19), en particulier est monté avec le bras de poussoir (19), sur un arbre principal (21) commun, où après désolidarisation du verrou destiné au levier d'actionnement (24), celui-ci est déplaçable avec l'entraînement de poussoir (68), en entraînant le bras de poussoir (19).

10. Dispositif selon la revendication 4, ainsi qu'une ou plusieurs autres revendications, caractérisé en ce que l'entraînement de poussoir (68) est réalisé sous forme d'entraînement à manivelle à mouvement permanent, l'organe de couplage (lever d'actionnement 24) destiné à assurer la liaison entre l'entraînement de poussoir (68) et le poussoir, pouvant être placé en appui sur une butée (tourillon 39) à mouvement conjoint de l'entraînement de poussoir (68).

11. Dispositif selon la revendication 10, caractérisé en ce que l'entraînement de poussoir (68), avec un lever pivotant (60), est soutenu sur l'arbre principal (21), avec possiblité de rotation libre.

12. Dispositif selon la revendication 7, ainsi qu'une ou plusieurs des autres revendications, caractérisé en ce que le verrou destiné à la fixation de l'organe de couplage (levier d'actionnement 24) est composé d'une butée (levier de blocage 69) mobile (pouvant pivoter), venant appuyer sur le levier d'actionnement (24) lorsqu'on se trouve en position de blocage.

13. Dispositif selon la revendication 4, ainsi qu'une ou plusieurs des autres revendications, caractérisé en ce que le levier d'actionnement (24) est réalisé sous forme de levier à deux bras et que le verrou destiné à la fixation du levier d'actionnement (24) agit dans la position initiale découplée sur une branche (bras d'exploration 27) ou un bras d'appui (70) libre, s'écartant de l'extrémité de couplage.

14. Dispositif selon la revendication 12, caractérisé en ce que le levier de blocage (69) est réalisé sous forme de lever à deux bras et est actionnable au moyen d'un vérin à fluide sous pression, en particulier avec un mouvement de pivotement.

15. Dispositif selon la revendication 4, caractérisé en ce que l'entraînement de poussoir présente un organe de commande (arbre de commande 40) réglable au moyen d'une manette (lever à main 41) et est entraîné en fonction des mouvements de transfert de l'élévateur d'emballages (14) et prédétermine le mouvement d'avance du poussoir (10) de manière qu'en fonction du réglage de l'organe de commande, les emballages (11) soient poussés en constituant des groupes à partir de piles (13), les groupes étant composés d'un nombre, pouvant être présélectionné, de couches superposées.

16. Dispositif selon la revendication 15, caractérisé en ce que l'organe de commande est composé de plusieurs disques de commande (35,36,37) disposés sur un arbre de commande (40) commun, disques sur lesquels des moyens d'exploration (galets palpeur 29, 30, 31) commandant les mouvements d'avance du poussoir (10) appuient et peuvent être activés à volonté au moyen de la manette (lever à main 41).

17. Dispositif selon la revendication 16, caractérisé en ce que les disques de commande (35, 36, 37) présentent un nombre d'évidements (38) différents pour les moyens d'exploration (galets palpeurs 29, 30, 31).

18. Dispositif selon la revendication 10, caractérisé en ce que l'organe de couplage (lever d'actionnement 24) peut être placé dans une position d'entraînement de poussoir (68), directement voisine et tournée vers l'organe de couplage, en étant relié à cet entraînement (68) en vue d'effectuer l'actionnement du poussoir (10).
